**Europäisches Patentamt**

**European Patent Office**

**Office européen des brevets**

(11) Numéro de publication : **0 174 233 B1**

(12) **FASCICULE DE BREVET EUROPÉEN**

(45) Date de publication du fascicule du brevet :
09.11.88

(21) Numéro de dépôt : **85401572.4**

(22) Date de dépôt : **01.08.85**

(51) Int. Cl.⁴ : **F 16 F 15/12, F 16 D 13/68**

(54) **Dispositif amortisseur de torsion à grand débattement angulaire, en particulier friction d'embrayage, notamment pour véhicule automobile.**

(30) Priorité : **03.08.84 FR 8412291**

(43) Date de publication de la demande :
**12.03.86 Bulletin 86/11**

(45) Mention de la délivrance du brevet :
**09.11.88 Bulletin 88/45**

(84) Etats contractants désignés :
**DE GB**

(56) Documents cités :
**DE-A- 3 314 908**
**GB-A- 1 200 013**
**GB-A- 2 083 592**

(73) Titulaire : **VALEO**
**64 Avenue de la Grande Armée**
**F-75017 Paris (FR)**

(72) Inventeur : **Carmillet, Roger**
**74 Rue Championnet**
**F-75018 Paris (FR)**
Inventeur : **Graton, Michel**
**7 Bd Mortier**
**F-75020 Paris (FR)**
Inventeur : **Bacher, Michel**
**14 Rue du Clos David**
**95580 Andilly (FR)**

(74) Mandataire : **CABINET BONNET-THIRION**
**95 Boulevard Beaumarchais**
**F-75003 Paris (FR)**

## Description

La présente invention concerne d'une manière générale les dispositifs amortisseurs de torsion comportant au moins deux parties coaxiales montées rotatives l'une par rapport à l'autre dans les limites d'un débattement angulaire déterminé et à l'encontre de moyens élastiques, communément dits moyens élastiques à action circonférentielle, aptes à agir circonférentiellement entre elles pour une plage au moins d'un tel débattement angulaire.

Ainsi qu'on le sait, un tel dispositif amortisseur de torsion entre usuellement dans la constitution d'une friction d'embrayage, notamment pour véhicule automobile, l'une de ses parties rotatives portant alors un disque de friction, destiné à être solidarisé en rotation avec un premier arbre, en pratique un arbre menant, l'arbre de sortie du moteur dans le cas d'un tel véhicule automobile, tandis qu'une autre comporte un moyeu par lequel elle est adaptée à être solidarisée en rotation avec un deuxième arbre, en pratique un arbre mené, l'arbre d'entrée d'une boîte de vitesses dans le cas concerné d'un tel véhicule automobile.

Un tel dispositif, comme décrit par exemple dans le DE-A-3314908, permet en effet d'assurer une transmission régulée du couple de rotation appliqué à l'une de ses parties rotatives lorsque l'autre est elle-même l'objet d'un couple de rotation, c'est-à-dire de filtrer les vibrations susceptibles de prendre naissance tout au long de la chaîne cinématique sur laquelle il est inséré, qui va du moteur aux arbres de roue commandés dans le cas d'un véhicule automobile.

La présente invention vise plus particulièrement le cas où au moins trois parties coaxiales sont mises en œuvre pour la constitution d'un tel dispositif amortisseur de torsion, à savoir, de l'axe de celui-ci à sa périphérie, une première partie comportant un moyeu, celui destiné à être solidarisé en rotation avec l'arbre d'entrée de la boîte de vitesses dans le cas d'un véhicule automobile, une deuxième partie comportant au moins un flasque, communément dit voile de moyeu, qui forme transversalement une pièce annulaire autour dudit moyeu, avec, entre lui et celui-ci, des moyens d'engrènement à jeu, et une troisième partie comportant elle aussi au moins un flasque, qui, comme le voile de moyeu, et parallèlement à celui-ci, forme transversalement une pièce annulaire autour du moyeu, mais sans relation avec celui-ci, cette troisième partie étant celle portant le disque de friction dans le cas d'un tel véhicule automobile.

En pratique, cette troisième partie comporte deux flasques, qui, établis axialement à distance l'un de l'autre, parallèlement l'un à l'autre, chacun respectivement de part et d'autre du voile de moyeu, sont reliés l'un à l'autre par des entretoises axiales traversant ledit voile de moyeu à la faveur d'évidements ménagés à cet effet dans celui-ci.

Ces flasques, qui sont axialement les plus extérieurs pour le dispositif amortisseur de torsion ainsi constitué, sont communément dits « rondelle de guidage », parce que, les moyens élastiques à action circonférentielle interposés entre, d'une part, la troisième partie coaxiale à laquelle ils appartiennent, et, d'autre part, la deuxième partie coaxiale, en l'espèce le voile de moyeu, intermédiaire entre celle-ci et la première, comportant des organes élastiques répartis circulairement, ils assurent le maintien, ou, autrement dit, le guidage de ces organes élastiques, en présentant des évidements dans lesquels, chacun individuellement, ces derniers sont au moins logés pour partie.

L'un des problèmes à résoudre dans la réalisation des dispositifs amortisseurs de torsion en trois parties de ce genre résulte de la nécessité qu'il y a à concilier deux exigences au moins apparemment contradictoires.

La première de ces exigences a trait au fait que, pour la minimisation, voire l'élimination, de certains bruits, et, plus précisément, des bruits communément dits bruits de « trash » apparaissant par exemple lorsque le conducteur du véhicule concerné enfonce la pédale d'accélérateur ou relâche celle-ci et dus à un entre-choquement, entre eux, et sous couple, des pignons de la boîte de vitesses dudit véhicule, il apparaît souhaitable, ainsi que l'expérience le confirme, que les moyens élastiques à action circonférentielle interposés entre les deuxième et troisième parties coaxiales constitutives d'un tel dispositif amortisseur de torsion présentent une raideur relativement faible, en pratique au plus égale à 1 m.daN par degré.

Corollairement, une deuxième exigence normalement à satisfaire, et, elle, impérative, et que, au terme du débattement angulaire entre lesdites deuxième et troisième parties, et donc, globalement, entre la première et la troisième, le couple maximal admissible soit supérieur aux couples moteurs maximaux les plus usuels.

Or ceux-ci sont fréquemment de l'ordre de 15 à 17 m.daN.

Par mesure de sécurité, il est donc souhaitable que le couple maximal transmissible entre les première et troisième parties coaxiales d'un dispositif amortisseur de torsion du genre concerné soit de l'ordre par exemple de 20 m.daN.

Or, dans les dispositifs amortiseurs de torsion du genre concerné connus à ce jour, le débattement angulaire maximal possible entre les deuxième et troisième parties coaxiales est limité.

Ce débattement angulaire trouve en effet sa limite dans l'extension circonférentielle qu'il est possible de donner aux évidements ménagés dans le voile de moyeu, constitutifs de la deuxième partie, pour le passage des entretoises axiales reliant l'un à l'autre les deux flasques, ou rondelles de guidage, constitutifs de la première partie.

Au-delà d'une certaine extension circonférentielle, ces évidements ne pourraient qu'amoindrir de manière rédhibitoire la résistance mécanique du voile de moyeu, au préjudice de la longévité de l'ensemble.

En pratique, dans les dispositifs amortisseurs de torsion du genre concerné connus à ce jour, le débattement angulaire entre les deuxième et troisième parties coaxiales est le plus souvent au plus égal à 10 degrés.

Si donc, pour une minimisation des bruits de « trash », on met en œuvre, entre ces deuxième et troisième parties, des moyens élastiques à action circonférentielle ne présentant qu'une raideur modérée, de l'ordre de 1 m.daN par degré par exemple, comme indiqué ci-dessus, le couple maximal admissible, au terme du débattement angulaire de l'ensemble, et, abstraction faite de celui dû aux moyens élastiques à action circonférentielle interposés entre les première et deuxième parties, qui est très faible, ces moyens élastiques à action circonférentielle ne présentant par eux-mêmes qu'une raideur relativement faible pour d'autres raisons, à savoir la filtration des bruits dits de point mort ou de ralenti, est au plus de l'ordre de 10 m.daN, ce qui est insuffisant.

La présente invention a d'une manière générale pour obtenir une disposition permettant de surmonter cette difficulté, et, par là, de satisfaire aux exigences opposées à concilier.

De manière plus précise, elle a pour objet un dispositif amortisseur de torsion, notamment pour véhicule automobile, du genre comportant au moins trois parties coaxiales deux à deux montées rotatives l'une par rapport à l'autre dans les limites d'un débattement angulaire déterminé et à l'encontre de moyens élastiques, dits moyens élastiques à action circonférentielle, aptes à agir circonférentiellement entre elles pour une plage au moins d'un tel débattement angulaire, à savoir une première partie comportant un moyeu, une deuxième partie comportant au moins un flasque, communément dit voile de moyeu, qui forme transversalement une pièce annulaire autour dudit moyeu, avec, entre lui et celui-ci, des moyens d'engrènement à jeu, et une troisième partie comportant elle aussi au moins un flasque, qui, comme le voile de moyeu, et parallèlement à celui-ci, forme transversalement une pièce annulaire autour du moyeu, mais sans relation avec celui-ci, ce dispositif amortisseur de torsion étant d'une manière générale caractérisé en ce que ladite deuxième partie comporte au moins un autre flasque, dit ci-après par simple commodité voile auxiliaire, ou contre-voile de moyeu, qui, comme le voile de moyeu, auquel il est associé, et parallèlement à celui-ci, forme transversalement une pièce annulaire autour du moyeu, avec, entre lui et celui-ci, des moyens d'engrènement à jeu, en combinaison avec une position alternée desdits moyens d'engrènement à jeu par rapport à ceux prévus entre le moyeu et le voile de moyeu, dont il résulte que, pour un premier sens circonférentiel du débattement angulaire relatif entre lesdites première et deuxième parties, c'est le voile de moyeu qui est le premier à intervenir, tandis que, pour le sens circonférentiel opposé dudit débattement angulaire, c'est au contraire le voile auxiliaire qui est le premier à intervenir.

En pratique, les moyens d'engrènement entre le moyeu et le voile de moyeu comportent deux dentures, dites ici par simple commodité dentures conjuguées, l'une sur le moyeu, l'autre sur le voile de moyeu, les moyens d'engrènement entre le moyeu et le voile auxiliaire comportent, de même, deux dentures conjuguées, l'une sur le moyeu, l'autre sur le voile auxiliaire, l'une au moins des dentures de telles dentures conjuguées présentant, parallèlement à l'axe de l'ensemble, au moins une dent, tandis que l'autre présente, pour coopération avec cette dent, une gorge, par laquelle elle est engagée sur ladite dent, et dont le développement circonférentiel est supérieur à celui de celle-ci, et, pour la configuration de repos de l'ensemble, tel que défini par les moyens élastiques à action circonférentielle interposés entre les deux parties concernées, il y a, pour un premier sens circonférentiel, un jeu circonférentiel entre les dentures conjuguées du moyeu et du voile de moyeu supérieur à celui existant, pour ce même sens circonférentiel, entre les dentures conjuguées du moyeu et du voile auxiliaire, tandis que, pour le sens circonférentiel opposé au précédent, il y a un jeu circonférentiel entre les dentures conjuguées du moyeu et du voile de moyeu inférieur à celui existant, pour ce même sens circonférentiel, entre les dentures conjuguées du moyeu et du voile auxiliaire.

Ainsi, la deuxième partie coaxiale du dispositif amortisseur de torsion concerné étant, suivant l'invention, décomposée en deux pièces distinctes, à savoir le voile de moyeu et le voile auxiliaire, qui n'ont aucun lien entre elles, et dont une intervient la première dans un premier sens circonférentiel tandis que l'autre intervient à son tour la première dans le sens circonférentiel opposé au précédent, il est avantageusement possible de répartir entre ces deux pièces le débattement angulaire global à assurer entre cette deuxième partie et la troisième, et, partant, les conditions, mécaniques notamment, étant égales par ailleurs, d'obtenir, entre lesdites deuxième et troisième parties, un débattement angulaire maximal largement supérieur à celui normalemnt admissible dans les dispositifs amortisseurs de torsion du genre concerné connus à ce jour.

En pratique, grâce à la disposition suivant l'invention, ce débattement angulaire peut sans difficulté être de l'ordre par exemple de 20 degrés.

Il en résulte avantageusement qu'il est dès lors possible, comme recherché, de mettre en œuvre entre les deuxième et troisième parties du dispositif amortisseur de torsion concerné des moyens élastiques à action circonférentielle ne présentant qu'une raideur modérée, de l'ordre par exemple, pour fixer les idées, de 1 m.daN par degré, tout en ayant la possibilité de filtrer les bruits de point mort ou de ralenti.

Les caractéristiques et avantages de l'invention ressortiront d'ailleurs de la description qui va suivre, à titre d'exemple, en référence aux dessins schématiques annexés sur lesquels :

la figure 1 est une vue partielle en élévation d'un dispositif amortisseur de torsion suivant l'invention, suivant la flèche I de la figure 2 ;

la figure 2 en est une vue en coupe axiale, suivant la ligne brisée II-II de la figure 1 ;

la figure 3 reprend, à échelle supérieure, le détail de la figure 2 repéré par un encart III sur celle-ci ;

la figure 4 reprend, à l'échelle de la figure 3, et avec des arrachements locaux, le détail de la figure 1 repéré par un encart IV sur celle-ci ;

la figure 5 est une vue en coupe axiale du moyeu que comporte le dispositif amortisseur de torsion suivant l'invention, représenté isolément ;

la figure 6 est une vue en élévation de ce moyeu, suivant la flèche VI de la figure 5 ;

la figure 7 est, à échelle inférieure, une vue d'une des parties constitutives d'un palier mis en œuvre dans le dispositif amortisseur de torsion suivant l'invention, représenté isolément ;

la figure 8 est, à l'échelle de la figure 7, une vue en élévation de l'autre desdites parties constitutives de ce palier ;

la figure 9 est une vue reprenant, à échelle supérieure, celle de la figure 8 ;

la figure 10 est, à l'échelle de la figure 1, une vue partielle en élévation d'un des flasques mis en œuvre dans le dispositif amortisseur de torsion suivant l'invention ;

la figure 11 est, de même, une vue partielle en élévation d'un autre de ces flasques ;

la figure 12 est une vue partielle en élévation d'un sous-ensemble propre à participer à la constitution du dispositif amortisseur de torsion suivant l'invention, suivant la flèche XII de la figure 13 ;

la figure 13 est une vue en coupe axiale de ce sous-ensemble, suivant la ligne brisée XIII-XIII de la figure 12 ;

la figure 14 est un diagramme illustratif du fonctionnement du dispositif amortisseur de torsion suivant l'invention ;

les figures 15A, 15B, 15C, 15D sont des vues partielles en élévation, qui, reprenant, à échelle inférieure, celle de la figure 4, illustrent elles aussi diverses phases successives du fonctionnement du dispositif amortisseur de torsion suivant l'invention.

Ces figures illustrent, à titre d'exemple, l'application de l'invention à une friction d'embrayage, notamment pour véhicule automobile.

Globalement, le dispositif amortisseur de torsion que constitue cette friction d'embrayage comporte trois parties coaxiales A, B, C deux à deux montées rotatives l'une par rapport à l'autre dans les limites d'un débattement angulaire déterminé et à l'encontre de moyens élastiques, communément dits moyens élastiques à action circonférentielle, aptes à agir circonférentiellement entre elles pour une plage au moins d'un tel débattement angulaire.

La partie A, ou première partie, est constituée par un simple moyeu 10 destiné à être calé en rotation sur un arbre non représenté, en pratique l'arbre d'entrée de la boîte de vitesses du véhicule concerné, formant arbre mené.

Par exemple, et tel que schématisé, l'alésage interne 11 de ce moyeu 10 est, pour ce faire, cannelé.

La partie B, ou deuxième partie, comporte, de manière connue en soi, un flasque 12, communément dit voile de moyeu, qui forme transversalement une pièce annulaire autour du moyeu 10, avec, entre lui et ledit moyeu 10, des moyens d'engrènement à jeu 13.

Ce voile de moyeu 12 est représenté isolément sur la figure 10.

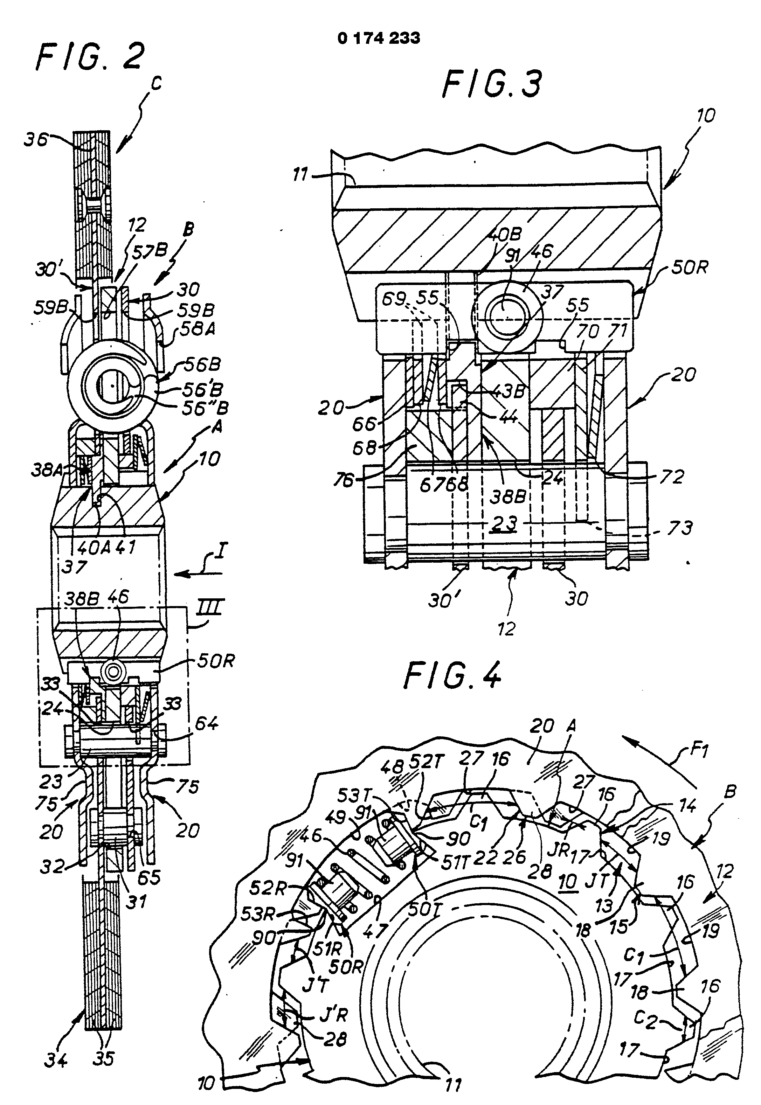

Ainsi qu'il est mieux visible à la figure 4, les moyens d'engrènement à jeu 13 prévus entre le moyeu 10 et le voile de moyeu 12 comportent deux dentures 14, 15, dites ici par simple commodité dentures conjuguées, l'une 14, sur le moyeu 10, et plus précisément sur la périphérie externe de celui-ci, et l'autre, 15, sur ledit voile de moyeu 12, et, plus précisément, sur la tranche de la périphérie interne de celui-ci.

L'une au moins des dentures de telles dentures conjuguées 14, 15 présente, parallèlement à l'axe de l'ensemble, au moins une dent, tandis que l'autre présente, pour coopération avec cette dent, une gorge par laquelle elle est engagée sur ladite dent et dont le développement circonférentiel est supérieur à celui de celle-ci.

En pratique, la denture 14 du moyeu 10 présente ainsi, régulièrement réparties circulairement, une pluralité de dents 16, en alternance avec des gorges 17, et, corollairement, la denture 15 du voile de moyeu 12 comporte, régulièrement réparties circulairement, une pluralité de dents 18, en alternance avec des gorges 19.

Les dents 16 de la denture 14 du moyeu 10 sont engagées dans les gorges 19 de la denture 15 du voile de moyeu 12, et, corollairement, les dents 18 de ladite denture 15 sont engagées dans les gorges 17 de ladite denture 14.

En pratique, mesuré sur une circonférence commune traversant par exemple à mi-hauteur les dents 16 de la denture 14 du moyeu 10, le développement circonférentiel C1 des gorges 19 de la denture 15 du voile de moyeu 12 est supérieur à celui C2 desdites dents 16 de la denture 14 du moyeu 10.

Dans la forme de réalisation représentée, et pour des raisons qui apparaîtront ci-après, la denture 14 du moyeu 10 s'étend axialement sur toute la longueur de celui-ci.

De même, la denture 15 du voile de moyeu 12 s'étend axialement sur toute la longueur de sa tranche.

Suivant l'invention, la partie B comporte en outre au moins un autre flasque 20, dit ci-après par simple commodité voile auxiliaire, qui, comme le voile de moyeu 12, auquel il est associé, et parallèlement à celui-ci, forme transversalement une pièce annulaire autour du moyeu 10, avec, entre lui et celui-ci, des moyens d'engrènement à jeu 22.

Dans la forme de réalisation représentée, il y a ainsi deux voiles auxiliaires 20 qui, établis axialement à distance l'un de l'autre, parallèlement l'un à l'autre, chacun respectivement de part et d'autre du voile de moyeu 12, sont reliés l'un à l'autre par des entretoises axiales 23 traversant ledit voile de moyeu 12 à la faveur d'évidements 24 ménagés à cet effet dans celui-ci.

En pratique, quatre entretoises 23 sont ainsi prévues, sensiblement à 90° deux à deux, et donc un nombre égal d'évidements 24 pour le voile de moyeu 12.

Chacune de ces entretoises axiales 23 est sertie, à ses extrémités, sur les voiles auxiliaires 20 qu'elle relie.

Dans la forme de réalisation représentée, les voiles auxiliaires 20 ont chacun une épaisseur moindre que celle du voile de moyeu 12, et celui-ci qui est en pratique réalisable à la presse, est lui-même d'épaisseur classique.

Les moyens d'engrènement à jeu 22 entre le moyeu 10 et les voiles auxiliaires 20 sont axialement en correspondance d'un de ces voiles auxiliaires 20 à l'autre.

Pour chacun de ces voiles auxiliaires 20, ils comportent deux dentures conjuguées, l'une sur le moyeu 10, l'autre sur un tel voile auxiliaire 20.

En pratique, la denture 14 du moyeu 10 s'étendant axialement sur toute la longueur de celle-ci, elle est commune au voile de moyeu 12 et au voile auxiliaire 20.

Autrement dit, le moyeu 10 comporte une même et seule denture 14 pour le voile de moyeu 12 et pour les voiles auxiliaires 20.

Comme pour le voile de moyeu 12, la denture conjuguée 26 des voiles auxiliaires 20 est ménagée à la périphérie interne de ces voiles auxiliaires 20, par exemple par découpe, en s'étendant en pratique sur toute la longueur de la tranche de celle-ci.

Une telle denture 26 présente, parallèlement à l'axe de l'ensemble, au moins une gorge 27, par laquelle elle est engagée, avec jeu, sur une dent 16 de la denture 14 du moyeu 10.

En pratique, une telle denture 26 comporte ainsi une pluralité de gorges 27, régulièrement réparties circulairement, en alternance avec des dents 28, suivant des dispositions semblables à celles décrites précédemment pour le voile de moyeu 12.

En pratique, également, dans la forme de réalisation représentée, les dentures 15 et 26 du voile de moyeu 12 et des voiles auxiliaires 20 sont superposables, en plan, les unes aux autres.

Autrement dit, dans cette forme de réalisation, le développement circonférentiel de chaque gorge 27 de la denture 26 d'un voile auxiliaire 20 est égal au développement circonférentiel C1 des gorges 19 de la denture 15 du voile de moyeu 12, et, mesuré dans les mêmes conditions, comme explicité ci-dessus, il est donc supérieur à celui C2 des dents 16 de la denture 14 du moyeu 10.

La partie C, ou troisième partie, comporte, elle aussi, au moins un flasque 30, qui, comme le voile de moyeu 12, et parallèlement à celui-ci, forme transversalement une pièce annulaire autour du moyeu 10, mais qui, à la différence de ce voile de moyeu 12, et donc des voiles auxiliaires 20, est sans relation avec ce moyeu 10, c'est-à-dire sans moyens d'engrènement à jeu entre lui et ce dernier.

Ce flasque 30 est représenté isolément à la figure 11.

Dans la forme de réalisation représentée, la partie C comporte en fait deux flasques 30, 30', qui, établis axialement à distance l'un de l'autre, parallèlement l'un à l'autre, chacun respectivement de part et d'autre du voile de moyeu 12, sont reliés l'un à l'autre par des entretoises axiales 31 traversant ledit voile de moyeu 12 à la faveur d'évidements 32 ménagés à cet effet dans celui-ci.

En pratique, il y a ainsi quatre entretoises axiales 31, disposées sensiblement à 90° deux à deux, et donc un nombre égal d'évidements 32 pour le voile de moyeu 12.

Dans la forme de réalisation représentée, les entretoises axiales 31 sont disposées sur une circonférence de diamètre supérieur à celui de la circonférence sur laquelle sont par ailleurs disposées les entretoises axiales 23 reliant l'un à l'autre les deux voiles auxiliaires 20.

En outre, dans la forme de réalisation représentée, les flasques 30, 30' sont disposés au voisinage immédiat du voile de moyeu 12, les voiles auxiliaires 20 étant eux-mêmes chacun respectivement disposés de part et d'autre de l'ensemble constitué par ce voile de moyeu 12 et ces flasques 30, 30'.

Autrement dit, dans cette forme de réalisation, les voiles auxiliaires 20 suivant l'invention forment chacun respectivement les flasques axialement les plus extérieurs pour le dispositif amortisseur de torsion concerné.

Il en résulte que, comme le voile de moyeu 12, les entretoises axiales 23 qui les relient l'un à l'autre traversent les flasques 30, 30', à la faveur d'évidements 33 ménagés à cet effet dans ceux-ci.

La partie C comporte, en outre, un disque de friction 34.

Dans la forme de réalisation représentée, le voile de celui-ci est directement formé par le flasque 30' précédemment décrit, celui-ci constituant en effet par lui-même, au-delà de la périphérie du voile de moyeu 12, des voiles auxiliaires 20, et du flasque 30 auquel il est associé, des pales 36, avec, rapportées sur ces pales 36, et de part et d'autre de celles-ci, deux garnitures de frottement 35.

Par serrage de ces garnitures de frottement 35 entre deux plateaux, à savoir un plateau de pression et un plateau de réaction, non représentés, la partie C est ainsi apte à être solidarisée en rotation avec un arbre.

Il s'agit en pratique d'un arbre menant.

Dans le cas concerné, d'une friction d'embrayage pour véhicule automobile, il s'agit, plus précisément, de l'arbre de sortie du moteur d'un tel véhicule.

Pour le centrage de la partie C par rapport à la partie A, il est radialement interposé, entre l'un des flasques 30, 30' de cette partie C et le moyeu 10 constituant cette partie A, un palier 37.

Dans la forme de réalisation représentée, ce palier 37 est ainsi interposé entre la périphérie interne du flasque 30' et le moyeu 10.

En outre, dans cette forme de réalisation, il est constitué de deux parties distinctes 38A, 38B, qui s'étendent chacune sur 180°, et qui sont affrontées l'une à l'autre suivant un plan diamétral de l'ensemble.

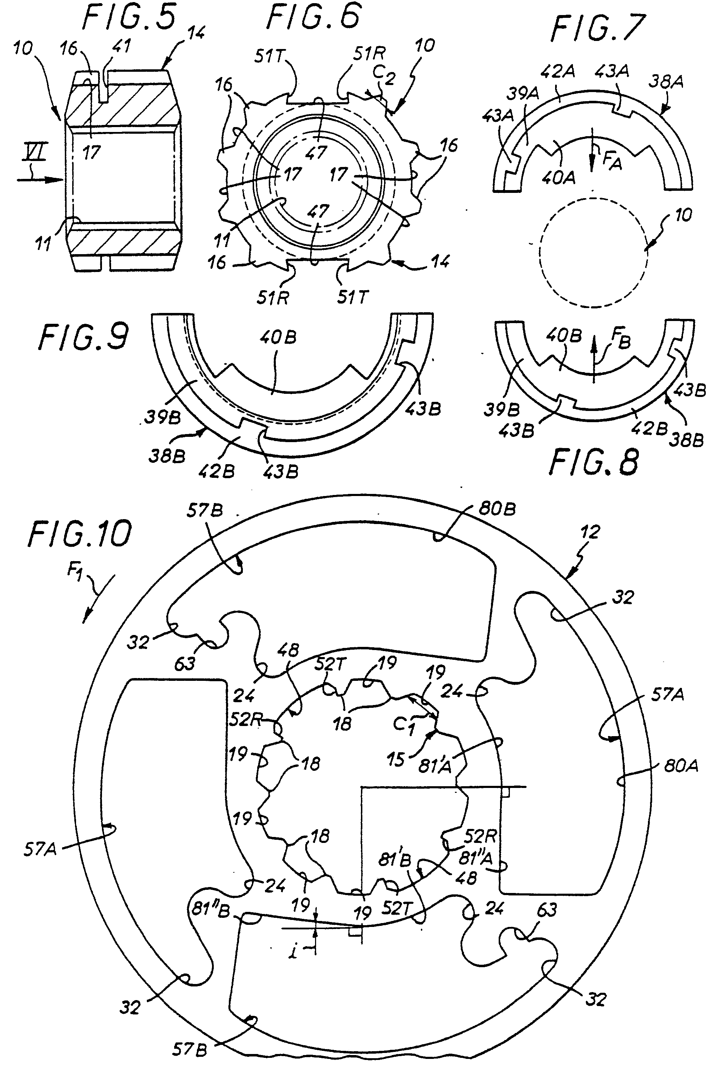

Les deux parties 38A, 38B ainsi constitutives du palier 37 sont chacune respectivement représentées isolément sur les figures 7, 8.

Elles comportent chacune une demi-couronne 39A, 39B, qui, à sa périphérie interne, et d'un premier côté axial, présente, circonférentiellement, sur une partie au moins de sa longueur, et, en pratique, dans la forme de réalisation représentée, sur une partie seulement de celle-ci, une languette 40A, 40B, qui s'étend radialement en saillie en direction de l'axe de l'ensemble, et par laquelle elles sont chacune conjointement engagées dans une même saignée annulaire 41 du moyeu 10 formée transversalement à cet effet dans celui-ci à compter de sa périphérie externe.

En pratique, pour le centrage recherché de la partie C par rapport à la partie A, c'est-à-dire des flasques 30, 30' par rapport au moyeu 10, cette languette 40A, 40B est admise à coopérer, par sa périphérie interne, avec le fond de la saignée 41 du moyeu 10 dans laquelle elle est engagée.

A sa périphérie externe, la couronne 39A, 39B de chacune des parties 38A, 38B constitutives du palier 37 présente, circonférentiellement, sur toute sa longueur, et du côté axial opposé au précédent, une collerette 42A, 42B qui s'étend radialement en saillie en direction opposée à l'axe de l'ensemble, et par laquelle elle est insérée entre le flasque 30' de la partie C et le voile de moyeu 12 de la partie B.

Dans la forme de réalisation représentée, cette collerette 42A, 42B a une épaisseur moindre que celle de la languette 40A, 40B associée, qui a elle-même une épaisseur moindre que celle de la partie courante de la couronne 39A, 39B correspondante, et elle est axialement décalée par rapport à ladite languette 40A, 40B.

Autrement dit, dans cette forme de réalisation, la collerette 42A, 42B de chacune des parties 38A, 38B constitutives du palier 37 s'étend dans un plan transversal différent de celui dans lequel s'étend sa languette 40A, 40B.

Enfin, de place en place, à sa périphérie externe, la couronne 39A, 39B de chacune des parties 38A, 38B constitutives du palier 37 présente des échancrures 43A, 43B dans lesquelles pénètrent radialement, pour la solidarisation en rotation de l'ensemble à la partie C, des dents 44 prévues radialement en saillie à cet effet en direction de l'axe de l'ensemble à la périphérie interne du flasque 30' appartenant à cette partie C, figure 3.

Les moyens élastiques à action circonférentielle interposés entre la partie A et la partie B comportent, dans la forme de réalisation représentée, au moins un ressort 46, du type ressort à boudin, qui, disposé sensiblement tangentiellement par rapport à une circonférence de l'ensemble, est logé pour partie dans une échancrure 47 interrompant localement la denture 14 du moyeu 10 en étant plus profonde que celle-ci, et pour partie dans des échancrures 48, 49 interrompant localement la denture 15 du voile de moyeu 12 et celle 22 des voiles auxiliaires 20.

Dans la forme de réalisation représentée, il est ainsi prévu, entre les parties A et B, deux ressorts 46, en positions sensiblement diamétralement opposées l'un par rapport à l'autre.

Le moyeu 10 présente donc deux échancrures 47, et, de même, le voile de moyeu 12 et les voiles auxiliaires 20 présentent chacun deux échancrures 48 et 49.

En pratique, les ressorts 46 ainsi mis en œuvre sont des ressorts de relativement faible raideur, pour la filtration des bruits dits de point mort ou de ralenti.

Dans la forme de réalisation représentée, et ainsi qu'il est mieux visible sur la figure 6, le fond de la saignée 41 du moyeu 10 s'étend suivant un cercle tangent au fond de ses échancrures 47.

Entre chacun des ressorts 46, d'une part, et le moyeu 10, le voile de moyeu 12 et les voiles auxiliaires 20, d'autre part, est circonférentiellement interposée, pour chaque sens circonférentiel, une barrette 50T, 50R, respectivement, la première, la barrette 50T, étant disposée en amont dans le sens circonférentiel qui, tel que repéré par une flèche F1 sur les figures, correspond au sens normal de rotation de l'ensemble, et la deuxième, la barrette 50R, étant au contraire disposée en aval dans le sens circonférentiel en question.

Chacune des barrettes 50T, 50R ainsi mises en œuvre s'étend axialement sur une distance au moins égale à celle séparant du voile de moyeu 12 un voile auxiliaire 20, et, en pratique, sur une distance au moins égale à celle séparant l'un de l'autre les deux voiles auxiliaires 20.

En outre, une telle barrette 50T, 50R est en permanence en appui contre un épaulement 51T, 51R du moyeu 10, formé en pratique par le bord d'extrémité circonférentielle correspondant de l'échancrure 47 correspondante de celui-ci.

De plus, elle est adaptée, ainsi qu'il apparaîtra ci-après, à porter tantôt sur un épaulement 52T, 52R du voile de moyeu 12, tantôt sur un épaulement 53T, 53R des voiles auxiliaires 20, ces épaulements étant, comme précédemment, formés par les bords d'extrémité circonférentielle correspondants des échancrures 48 et 49 correspondantes de ce voile de moyeu 12 et de ces voiles auxiliaires 20.

Pour ce faire, chacune des barrettes 50T, 50R présente à son dos une dépression 90 en forme de dièdre, formant dièdre d'emboîtement, tandis que, pour centrage du ressort 46 qui prend appui sur elle, elle comporte en saillie un ergot 91, comme décrit dans le FR-A-2 270 491.

Enfin, pour sa retenue axiale, chacune des barrettes 50T, 50R présente, le long de son bord axial radialement le plus éloigné de l'axe de l'ensemble, une échancrure 55, par laquelle elle est engagée sur le palier 37, ou, plus précisément, la partie 38A, 38B correspondante de celui-ci.

En pratique, un tel palier 37 étant établi axialement à distance du plan transversal moyen de l'ensemble, qui passe globalement par l'axe des ressorts 46, chacune des barrettes 50T, 50R présente deux échancrures 55 identiques, disposées chacune respectivement de part et d'autre de ce plan transversal moyen, symétriquement de part et d'autre de l'ergot 91 qu'elle comporte, pour en permettre une mise en place indifférenciée dans un sens axial ou dans l'autre dans l'ensemble, seule l'une desdites échancrures 55 étant ainsi utilisée après une telle mise en place.

Ainsi qu'on l'aura compris, c'est à la faveur des espaces libres que laissent circonférentiellement entre elles les languettes 40A, 40B des deux parties 38A, 38B constitutives du palier 37 que sont logés les ensembles formés par les barrettes 50T, 50R et les ressorts 46, la longueur circonférentielle desdites languettes 40A, 40B ayant très précisément été réduite à cet effet dans cette forme de réalisation.

De préférence, il existe même circonférentiellement un léger jeu entre chacune des barrettes 50T, 50R et l'extrémité circonférentielle correspondante de la languette 40A, 40B concernée.

Dans la forme de réalisation représentée, les moyens élastiques à action circonférentielle interposés circonférentiellement entre la partie B et la partie C comportent une pluralité d'organes élastiques 56A, 56B régulièrement répartis circulairement en étant tous sensiblement disposés tangentiellement à une même circonférence de l'ensemble.

En pratique, dans cette forme de réalisation, il y a ainsi deux organes élastiques 56A, et, en alternance avec ceux-ci, deux organes élastiques 56B, lesdits organes élastiques 56A et 56B étant chacun constitués de deux ressorts à boudin coaxiaux 56'A, 56"A et 56"B, 56""B.

Ces organes élastiques 56A, 56B, qui, dans la forme de réalisation représentée, sont tous identiques, ont globalement une raideur supérieure à celle, qui est relativement faible, des ressorts 46 précédents.

Ils sont tous chacun au moins pour partie logés, d'une part, dans un évidement 57A, 57B du voile de moyeu 12 et dans des évidements 58A, 58B des voiles auxiliaires 20, formés en pratique par des fenêtres dudit voile de moyeu 12 et desdits voiles auxiliaires 20, et, d'autre part, dans des évidements 59A, 59B des flasques 30, 30', également formés en pratique par des fenêtres de ceux-ci.

Dans la forme de réalisation représentée, le bord radial, ou périphérique, radialement le plus externe 80A, 80B des évidements 57A, 57B que présente ainsi le voile de moyeu 12 a un contour circulaire, en étant centré sur l'axe de l'ensemble, figure 10.

Par contre, leur bord radial, ou périphérique, radialement le plus interne, est formé successivement, d'une part, d'un tronçon de contour circulaire 81'A, 81'B, centré sur l'axe de l'ensemble, et, d'autre part, d'un tronçon rectiligne 81"A, 81"B, dans le sens circonférentiel opposé à celui qui, tel que repéré par la flèche F1 sur la figure 10, correspond au sens normal de rotation pour l'ensemble ; pour un évidement 57A, le tronçon rectiligne 81"A s'étend suivant la tangente à son point de raccordement avec le tronçon de contour circulaire 81'A, tandis que, pour un évidement 57B, le tronçon rectiligne 81"B fait un angle i avec la tangente à son point de raccordement avec le tronçon de contour circulaire 81"B, en s'étendant radialement entre celle-ci et l'axe de l'ensemble.

En pratique, lesdits tronçons 81'A, 81"A, d'une part, et 81'B, 81"B d'autre part se raccordent l'un à l'autre suivant sensiblement la zone médiane des évidements 57A, 57B concernés.

Corollairement, dans cette forme de réalisation, si, comme précédemment, le bord radial ou périphérique, radialement le plus externe 82A, 82B des évidements 59A, 59B des flasques 30, 30' ont un contour circulaire, celui-ci n'est pas centré sur l'axe de l'ensemble mais sur un point situé entre sa zone médiane et ce dernier, figure 11 ; et a donc un rayon plus court.

En outre, pour ces évidements 59A, 59B, qui sont tous identiques, le bord radial, ou périphérique, radialement le plus interne est formé, successivement, dans le sens circonférentiel opposé à celui qui, tel que repéré par la flèche F1 sur la figure 11, correspond au sens normal de rotation pour l'ensemble, d'une part d'un tronçon de contour circulaire 83'A, 83'B centré sur l'axe de l'ensemble, et, d'autre part, d'un tronçon rectiligne 83"A, 83"B qui fait un angle ī avec la tangente à son point de raccordement avec le tronçon de contour circulaire 83'A, 83'B en s'étendant radialement au-delà de ladite tangente par rapport audit axe.

Ces dispositions sont favorables à de bonnes conditions de travail pour les organes élastiques 56A, 56B et à un évidement minimal et donc à une bonne résistance mécanique, pour le voile de moyeu 12 et les flasques 30, 30'.

Dans la forme de réalisation représentée, les évidements 57A, 58A, 59A servant ainsi de logements aux organes élastiques 56A ont tous un même développement circonférentiel.

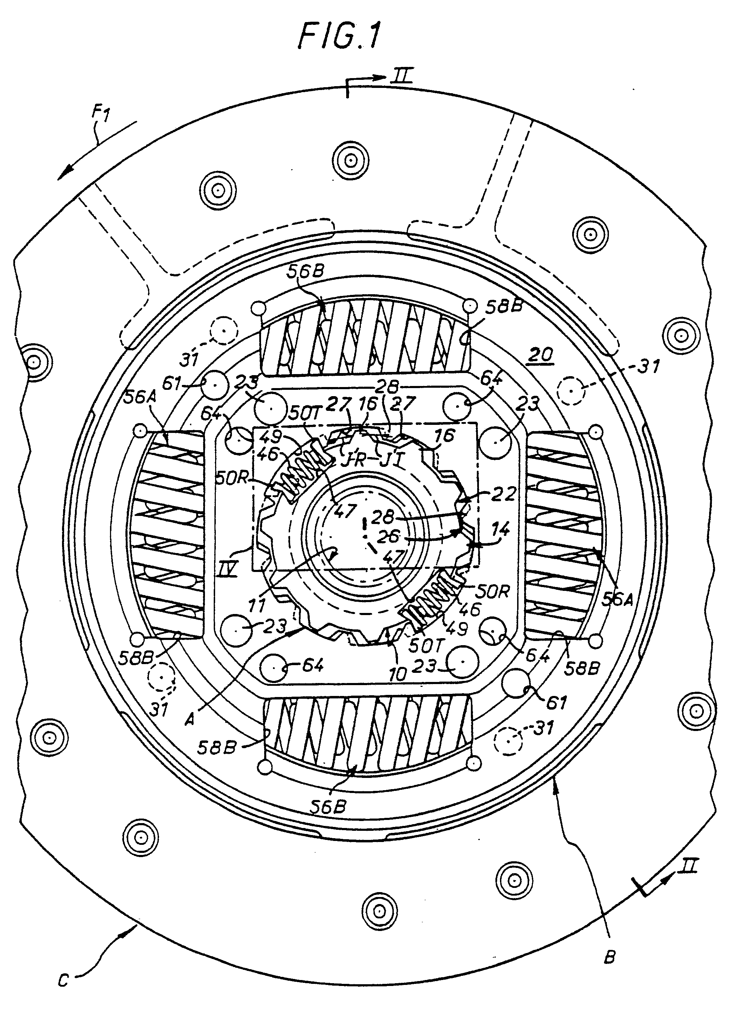

Pour la configuration de repos de l'ensemble, représentée à la figure 1, ils sont tous axialement en correspondance l'un avec l'autre, tant à l'un de leurs bords d'extrémité circonférentielle qu'à l'autre de ces bords.

Par contre, pour les organes élastiques 56B, les évidements 57B et 58B du voile de moyeu 12 et des voiles auxiliaires 20 ont un développement circonférentiel supérieur à celui des évidements circonférentiels 59B des flasques 30, 30'.

Pour la configuration de repos de l'ensemble, et tel qu'il est mieux visible à la figure 12, ceux des bords d'extrémité circonférentielle desdits évidements 57B, 58B, 59B qui sont en aval dans le sens circonférentiel qui, tel que représenté par la flèche F1 sur cette figure 12, correspond au sens normal de rotation pour l'ensemble, sont axialement en correspondance l'un avec l'autre, comme précédemment, par contre, le bord d'extrémité circonférentielle des évidements 57B du voile de moyeu 12 qui est en amont dans le sens circonférentiel en question se trouve circonférentiellement décalé, vers l'amont, par rapport au bord circonférentiel correspondant des évidements 59B des flasques 30, 30', et il en est de même pour le bord d'extrémité circonférentielle correspondant des évidements 58B des voiles auxiliaires 20.

Quoi qu'il en soit, et ainsi qu'on le notera, les voiles auxiliaires 20 forment les flasques axialement les plus extérieurs du dispositif amortisseur de torsion suivant l'invention et présentant des évidements 58A, 58B dans lesquels sont chacun individuellement au moins logés pour partie les organes élastiques 56A, 56B constituant les moyens élastiques à action circonférentielle interposés entre la partie B et la partie C, ils constituent, pour ces organes élastiques 56A, 56B, ce qu'il est usuellement convenu d'appeler des « rondelles de guidage », l'un au moins des bords d'extrémité radiale de leurs dits évidements 58A, 58B, et, par exemple, celui radialement le plus externe, étant avantageusement conformé en auvent à cet effet, tel que représenté.

En outre, pour un bon appui des organes élastiques 56A, 56B, ces voiles auxiliaires 20 présentent chacun annulairement, dans la zone de leurs évidements 58A, 58B, et dirigé axialement vers l'intérieur, un embouti 75, figure 2.

L'épaisseur axiale de l'ensemble s'en trouve réduite d'autant dans cette zone.

Cette disposition favorise la mise en œuvre de ressorts déjà existants pour la constitution des organes élastiques 56A, 56B ; elle conduit en outre avantageusement à un renforcement de la rigidité des voiles auxiliaires 20, 20'.

Par ailleurs, dans la forme de réalisation représentée, les évidements 24 prévus dans le voile de moyeu 12 pour le passage des entretoises axiales 23 forment des prolongements circonférentiels des évidements 57A, 57B également prévus dans ce voile de moyeu 12 pour les organes élastiques 56A, 56B.

En pratique, ces prolongements circonférentiels s'étendent tous circonférentiellement dans le même sens, qui est celui correspondant au sens normal de rotation de l'ensemble repéré par la flèche F1 sur la figure 12, vers l'aval par rapport à ce sens normal de rotation, et ils s'étendent le long de celui des bords d'extrémité radiale de ces évidements 57A, 57B qui est radialement le plus interne, à compter de l'extrémité circonférentielle concernée de celui-ci.

De même, les évidements 32 prévus dans le voile de moyeu 12 pour le passage des entretoises axiales 31 forment des prolongements circonférentiels des évidements 57A, 57B de ce voile de moyeu 12, et ces prolongements circonférentiels, qui s'étendent tous circonférentiellement dans le même sens, le même que le précédent, s'étendent le long de celui des bords d'extrémité radiale de ces évidements 57A, 57B qui est radialement le plus externe, à compter de l'extrémité circonférentielle concernée de celui-ci.

Dans la forme de réalisation représentée, des trous de repérage 61, 62 étant prévus dans les voiles auxiliaires 20 et dans les flasques 30, 30', il correspond à ces trous 61, 62, dans le voile de moyeu 12, des échancrures 63 débouchant le long de celui des bords d'extrémité radiale des prolongements circonférentiels 32 de ce voile de moyeu 12 qui est radialement le plus interne.

Corollairement, les évidements 33 prévus dans les flasques 30, 30' pour le passage des entretoises axiales 23 forment des prolongements circonférentiels des évidements 59A, 59B prévus par ailleurs dans ces mêmes flasques 30, 30' pour les organes élastiques 56A, 56B, et ces prolongements circonférentiels, qui s'étendent tous circonférentiellement dans le même sens, à savoir le sens normal de rotation de l'ensemble repéré par la flèche F1 à la figure 11, comme précédemment, s'étendent le long de celui des bords d'extrémité radiale de ces évidements 59A, 59B qui est radialement le plus interne, à compter de l'extrémité circonférentielle concernée de celui-ci.

Bien entendu, pour être en prise avec les entretoises axiales 23, les voiles auxiliaires 20 sont chacun ajourés de trous 64 propres au passage de la queue de ces entretoises axiales 23 nécessaire à leur sertissage.

En pratique, ces voiles auxiliaires 20 étant identiques l'un à l'autre, ils présentent chacun deux jeux de trous 64, pour pouvoir être indifféremment mis en place d'un côté ou de l'autre du voile de moyeu 12.

De même, pour être en prise avec les entretoises axiales 31, les flasques 30, 30' sont chacun ajourés de trous 65 propres au passage de la queue de ces entretoises axiales 31 nécessaire à leur sertissage.

En pratique, bien que, au moins dans une certaine mesure, le centrage des voiles auxiliaires 20 par rapport au moyeu 10 puisse être assuré par leur denture 26, ce centrage est de préférence assuré par les entretoises axiales 23, par coopération de celles-ci avec les évidements 33 des flasques 30, 30' qu'elles traversent, ces flasques 30, 30' se trouvant eux-mêmes centrés sur le moyeu 10 par le palier 37, comme indiqué ci-dessus.

De même, le centrage du voile de moyeu 12 peut être assuré par ces entretoises axiales 23 ; il peut également être assuré par les entretoises axiales 31.

Entre les diverses parties A, B, C constitutives du dispositif amortisseur de torsion interviennent, enfin, de manière connue en soi, des moyens de frottement.

Dans la forme de réalisation représentée ceux-ci comportent, outre le palier 37 déjà précédemment décrit, et plus précisément les collerettes 42A, 42B des deux parties 38A, 38B constitutives de celui-ci, une rondelle de frottement 66, qui, disposée au contact de la face interne de celui des voiles auxiliaires 20 qui est disposé du même côté du voile de moyeu 12 que le palier 37, est soumise à des moyens élastiques à action axiale la sollicitant en permanence en appui contre ce voile auxiliaire 20, figure 3.

En pratique, ces moyens élastiques à action axiale sont constitués par une rondelle élastique 67, du type rondelle Belleville, interposée entre deux rondelles de répartition 68, qui, disposées, l'une au contact de la rondelle de frottement 66, l'autre au contact du palier 37, sont l'une et l'autre calées en rotation, par des dents 69, sur le moyeu 10, lesdites dents 69 étant en prise avec les dents 16 de la denture 14 de ce moyeu 10.

Dans la forme de réalisation représentée, les moyens de frottement intervenant entre les parties A, B, C constitutives du dispositif amortisseur de torsion suivant l'invention comportent, encore, une rondelle de frottement 70, qui est radialement disposée à la périphérie interne du flasque 30, entre celle-ci et le moyeu 10.

Cette rondelle de frottement 70 est axialement au contact, d'une part, du voile de moyeu 12, et, d'autre part, d'une rondelle de répartition 71, qui est elle-même soumise à des moyens élastiques à action axiale, en pratique une rondelle Belleville 72, prenant appui sur le voile auxiliaire 20 voisin, et qui, par des doigts 73 faisant saillie radialement à sa périphérie externe, est en prise avec l'une au moins des entretoises axiales 23, en étant donc calée en rotation sur les voiles auxiliaires 20 par celle-ci.

Les moyens de frottement entre les parties A, B, C constitutives du dispositif amortisseur de torsion suivant l'invention comportent, enfin, dans la forme de réalisation représentée, une rondelle de frottement 76 qui, disposée axialement entre le flasque 30' et le voile auxiliaire 20 proche de celui-ci, s'étend radialement entre les entretoises axiales 23 et les rondelles 66, 67, 68 précédentes.

Pour la configuration de repos de l'ensemble, représentée sur les figures 1 et 4, les ressorts 46 constituant les moyens élastiques à action circonférentielle interposés entre les parties A et B définissent pour celles-ci une position de centrage relatif pour laquelle il y a, pour un premier sens circonférentiel, qui, repéré par la flèche F1 sur les figures 1 et 4, correspond au sens normal de rotation de l'ensemble, un jeu circonférentiel JT entre les dentures conjuguées 14, 15 du moyeu 10 et du voile de moyeu 12, et, pour le sens circonférentiel opposé, un jeu JR, figure 4.

De même, pour cette configuration de repos, il y a, pour le sens circonférentiel repéré par la flèche F1, un jeu circonférentiel J'T entre les dentures conjuguées 14, 26 du moyeu 10 et des voiles auxiliaires 20, et, pour le sens circonférentiel opposé, un jeu J'R, figures 1 et 4.

Suivant l'invention, il est établi, pour les moyens d'engrènement à jeu 13, 22 correspondants, une disposition alternée, suivant laquelle le jeu circonférentiel JT existant, pour le sens circonférentiel correspondant, entre les dentures conjuguées 14, 15 du moyeu 10 et du voile de moyeu 12 est supérieur à celui J'T existant, pour ce même sens circonférentiel, entre les dentures conjuguées 14, 26 dudit moyeu 10 et des voiles auxiliaires 20, cependant que, pour le sens circonférentiel opposé au précédent, le jeu circonférentiel JR existant entre les dentures conjuguées 14, 15 du moyeu 10 et du voile de moyeu 12 est au contraire inférieur à celui J'R existant, pour ce même sens circonférentiel, entre les dentures conjuguées 14, 26 dudit moyeu 10 et des voiles auxiliaires 20.

En pratique, pour la configuration de repos de l'ensemble, les barrettes 50T sont chacune en appui, sous la sollicitation des ressorts 46, d'une part, sur l'épaulement 51T correspondant du moyeu 10, et d'autre part sur l'épaulement 53T correspondant des voiles auxiliaires 20, et, corollairement, les barrettes 50R sont elles-mêmes chacune en appui, sous la sollicitation de ces mêmes ressorts 46, d'une part, sur l'épaulement 51R correspondant du moyeu 10, et, d'autre part, sur l'épaulement 52R correspondant du voile de moyeu 12, à l'image de la disposition alternée suivant l'invention.

Il résulte de la disposition suivant l'invention que, comme explicité ci-après, pour un premier sens circonférentiel du débattement angulaire relatif entre la partie A et B, celui qui, correspondant au sens normal de rotation de l'ensemble, correspond également à un fonctionnement en « tirage » dudit ensemble, ce sont les voiles auxiliaires 20 de ladite partie B qui sont les premiers à intervenir, tandis que, pour le sens circonférentiel opposé au précédent, qui correspond donc à un fonctionnement en « rétro » de l'ensemble, c'est au contraire le voile de moyeu 12 de cette même partie B qui est le premier à intervenir.

En effet, en fonctionnement, lorsqu'un couple est appliqué à la partie C, les ressorts 46 interposés entre la partie B et la partie A sont les premiers à céder, puisque de raideur relativement faible, tout se passant comme si la partie B se trouvait par ailleurs verrouillée angulairement sur la partie C par les organes élastiques 56A, 56B, compte tenu de la raideur relativement grande de ceux-ci.

Au cours de la première phase de fonctionnement qui commence ainsi, tout se passe donc comme si les parties C, B tournaient conjointement autour de la partie A.

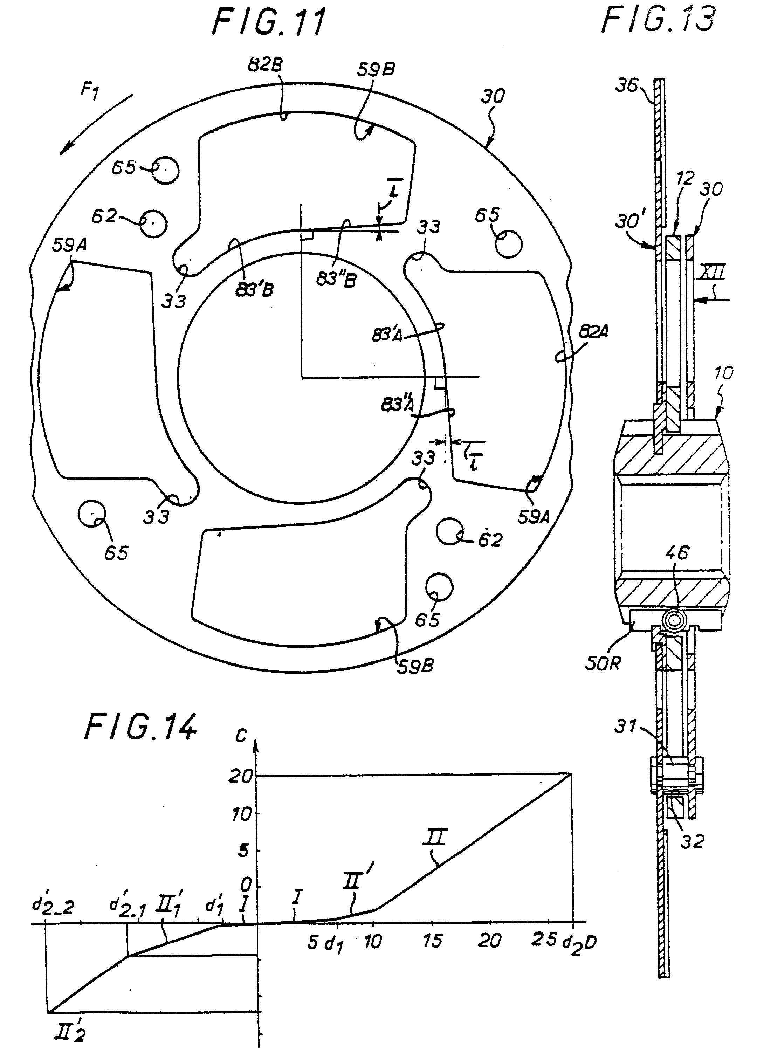

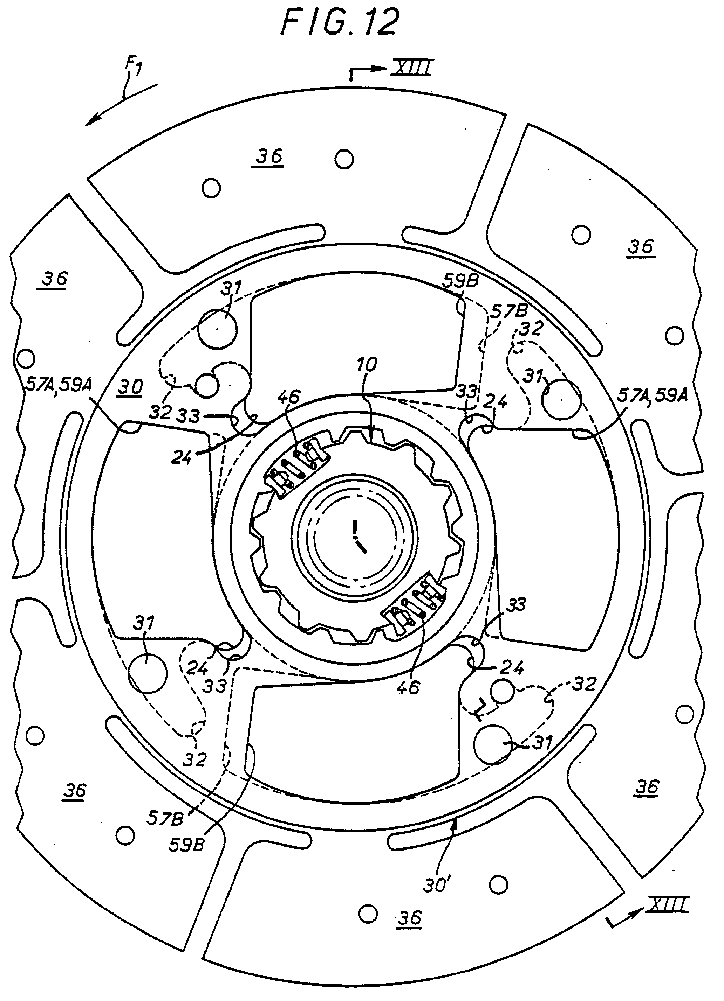

Sur le diagramme de la figure 14, sur lequel est reporté, en abscisses, le débattement angulaire D entre la partie C et la partie A, et, en ordonnées, le couple C transmis de l'une à l'autre de celles-ci, la courbe représentative I de cette première phase de fonctionnement est un segment de droite, qui, issu de l'origine, a une pente relativement faible, à l'image de la raideur, relativement faible, des ressorts 46.

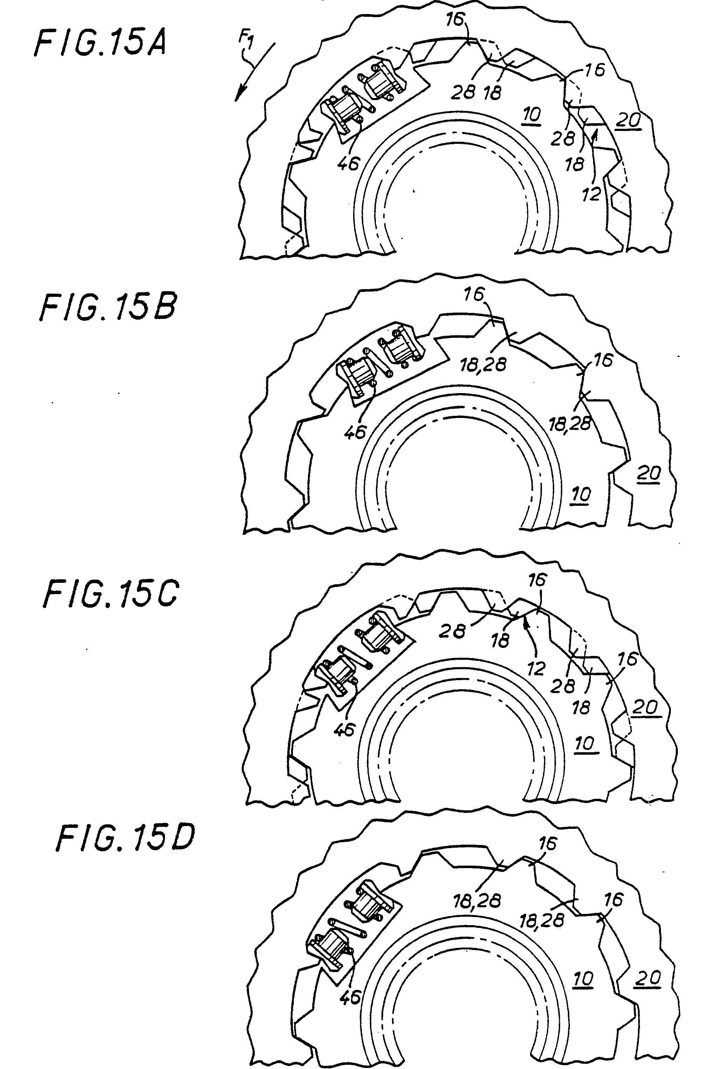

Cette première phase de fonctionnement se poursuit jusqu'à ce que, pour un débattement angulaire d1, les ressorts 46 se trouvent saturés, et que, par les dents 28 de leur denture 26, les voiles auxiliaires 20 viennent alors porter de manière positive sur les dents 16 de la denture 14 du moyeu 10, figure 15A.

A compter de cet instant, qui marque le début d'une deuxième phase de fonctionnement, les organes élastiques 56A, 56B interposés entre les parties C et B interviennent à leur tour, en ajoutant leurs effets à ceux des ressorts 46, qui restent comprimés.

En pratique, compte tenu des dispositions constructives précisées ci-dessus, ces organes élastiques 56A, 56B interviennent ainsi tous simultanément pour le sens circonférentiel concerné, qui correspond à un fonctionnement en « tirage » de l'ensemble, c'est-à-dire à un fonctionnement au cours duquel le couple moteur appliqué à la partie C est supérieur au couple résistant dont est l'objet la partie A.

Ces organes élastiques 56A, 56B se trouvent en effet alors tous progressivement comprimés entre, d'une part, leur appui sur les flasques 30, 30' de la partie C, et, d'autre part, leur appui sur les voiles auxiliaires 20.

Par contre, libéré alors temporairement de tout appui sur ces organes élastiques 56A, 56B, le voile de moyeu 12 se trouve momentanément fou, aux frottements près, par rapport à l'ensemble, jusqu'à ce que, le jeu circonférentiel JT correspondant étant à son tour absorbé, figure 15B, il vienne lui aussi en appui positif, par les dents 18 de sa denture 15, alors axialement alignées avec celles 28 des voiles auxiliaires 20, sur les dents 16 de la denture 14 du moyeu 10, et soit ainsi à nouveau solidaire en rotation desdits voiles auxiliaires 20.

Sur le diagramme de la figure 14, la courbe représentative II de cette deuxième phase de fonctionnement est globalement un second segment de droite de pente largement supérieure à celle du segment de droite précédent, puisque cette pente est alors à l'image de la raideur des organes élastiques 56A, 56B, à laquelle s'ajoute d'ailleurs la précontrainte des ressorts 46, ceux-ci restant en effet comprimés, comme indiqué ci-dessus.

En pratique, ce segment de droite II se raccorde au segment de droite I précédent par un segment de droite II' de pente intermédiaire, en raison d'une attaque en biais, de manière connue en soi, des organes élastiques 56A, 56B entre les flasques 30, 30', d'une part, et les voiles auxiliaires 20, d'autre part.

Cette deuxième phase de fonctionnement se poursuit jusqu'à ce que, pour un débattement angulaire d2, il y ait un entraînement positif de la partie B par la partie C, soit que l'un au moins des organes élastiques 56A, 56B intervenant entre celles-ci vienne alors à spires jointives, soit que l'une au moins des entretoises axiales 31 vienne alors en butée contre le fond de l'évidement 32 du voile de moyeu 12 qu'elle traverse.

Dans ce dernier cas, ce voile de moyeu 12, qui jusqu'alors, pour le sens circonférentiel concerné, n'est pas intervenu, sert de butée intermédiaire entre la partie C, qui est la partie menante, et la partie A, qui est la partie menée.

Ainsi, le surcouple transite alors par les entretoises axiales 31.

En toute hypothèse, il est fait en sorte que, grâce aux évidements 24 du voile de moyeu 12 et ceux 33 des flasques 30, 30', les entretoises axiales 23 n'interviennent pas, lesdits évidements 33 des flasques 30, 30' ayant à cet effet un développement circonférentiel supérieur à celui desdits évidements 24 du voile de moyeu 12.

Si l'on suppose maintenant que, à un instant donné, le couple s'inverse, le couple moteur appliqué à la partie C devenant inférieur au couple résistant appliqué à la partie A, un processus inverse du précédent s'établit, suivant un fonctionnement dit en « rétro » pour l'ensemble.

Suivant un processus inverse de celui précédemment décrit, il y a, tout d'abord, une détente, quasi instantanée, des organes élastiques 56A, 56B tout se passant comme si, tout en continuant bien entendu à tourner dans leur ensemble dans le même sens de rotation, qui est le sens circonférentiel repéré par la flèche F1 sur les figures, les parties B, C connaissaient par rapport à la partie A un mouvement de rotation rétrograde, suivant un sens circonférentiel inverse du précédent.

Après passage à la configuration de repos de l'ensemble, ce mouvement relatif de rotation rétrograde se poursuit.

Dans un premier temps, il conduit, au bout d'un débattement angulaire d'1, à une absorption du jeu circonférentiel JR entre les dentures conjuguées 14, 15 du moyeu 10 et du voile de moyeu 12, et donc à un appui positif du voile de moyeu 12 sur le moyeu 10, figure 15C, les ressorts 46 étant à nouveau saturés, mais dans le sens inverse du précédent.

Ainsi donc, pour un fonctionnement en « rétro », c'est le voile de moyeu 12 qui intervient en premier, alors que, pour le fonctionnement en « tirage » précédemment décrit, il s'agissait des voiles auxiliaires 20.

La courbe représentative I' de cette première phase de fonctionnement est un segment de droite, qui, passant par l'origine, est dans le prolongement du segment de droite I correspondant.

Mais, à la différence du fonctionnement en « tirage » précédent, et en raison des dispositions constructives adoptées dans la forme de réalisation, seuls interviennent ensuite, dans un premier temps, les organes élastiques 56A en ajoutant comme précédemment leurs effets à la précontrainte des ressorts 46, ceux-ci restant comprimés.

Pour un débattement angulaire d'2-1, correspondant à une absorption du décalage circonférentiel existant entre les bords d'extrémité circonférentielle concernés des évidements 57B, 58B-59B dans lesquels ils sont logés, les organes élastiques 56B interviennent à leur tour.

Ainsi donc, la courbe représentative du fonctionnement correspondant est formée de deux tronçons de droite II'$_1$, II'$_2$ successifs, le premier ayant une pente intermédiaire entre celle des segments de droite I, II précédents et le deuxième ayant une pente sensiblement égale à celle de ce dernier.

Au cours de cette deuxième phase de fonctionnement, les voiles auxiliaires 20 sont fous, aux frottements près, comme l'était le voile de moyeu 12 au cours du fonctionnement en « tirage » précédent, jusqu'à ce que, le jeu circonférentiel J'R correspondant étant à son tour absorbé, ils viennent eux aussi en appui positif, par leurs dents 28, sur les dents 16 du voile de moyeu 12, figure 15B.

Cette deuxième phase de fonctionnement se poursuit jusqu'à ce que, pour un débattement angulaire d'2-2, il y ait un appui positif entre les parties coaxiales B, C soit que, comme précédemment, l'un quelconque des organes élastiques 56A, 56B au moins vienne alors à spires jointives, soit que l'une au moins des entretoises axiales 23 reliant les voiles auxiliaires 20 vienne alors en appui sur le fond de l'évidement 33 des flasques 30, 30' qu'elle traverse.

Dans un tel cas, et à l'inverse de la disposition précédente, c'est donc à travers les voiles auxiliaires 20 que se fait alors un appui positif entre la partie C et la partie A, le surcouple transitant par les entretoises axiales 23.

Ainsi qu'on le notera, si, au cours du fonctionnement en « tirage », les entretoises axiales 23, 31 se débattent par rapport au voile de moyeu 12 à la faveur d'évidements spécifiques 24, 32 prévus à cet effet dans celui-ci, au cours du fonctionnement en « rétro » elles se débattent au contraire par rapport à lui à la faveur, au moins pour partie, des évidements 57A, 57B qui y sont par ailleurs prévus pour les organes élastiques 56A, 56B.

Il en résulte que, les conditions étant égales par ailleurs, l'amoindrissement mécanique dont est affecté le voile de moyeu 12 en raison des évidements qui y sont ménagés pour le passage de ces entretoises axiales est réduit.

A l'inverse, pour une résistance mécanique égale, ces évidements peuvent avoir circonférentiellement une extension supérieure.

Autrement dit, le débattement angulaire entre les parties C et B peut alors être supérieur.

En pratique, grâce à l'invention, il peut par exemple être de l'ordre de 20°, comme l'illustre le diagramme de la figure 14, sur lequel le débattement angulaire d1 a été supposé égal à 7° et le débattement angulaire d2 à 27°.

Bien entendu, ces valeurs ne sont ici données qu'à titre d'exemple illustratif, sans qu'il puisse en résulter une quelconque limitation de l'invention.

Ainsi qu'on le remarquera, par ailleurs, en se reportant aux figures 11, 12, le moyeu 10, le voile de moyeu 12, les flasques 30, 30', et donc le disque de friction 34 formé par le flasque 30', peuvent avantageusement constituer conjointement, après mise en place des entretoises axiales 31, et avec les ressorts 46 et les barrettes 50T, 50R correspondantes, un sous-ensemble unitaire, apte à être pré-assemblé individuellement, et à être manipulé en tant que tel, avant l'assemblage des autres constituants du dispositif amortisseur de torsion suivant l'invention.

En effet, après un tel pré-assemblage, qui suppose, tel qu'illustré par les figures 7, 8, une présentation radiale, vis-à-vis du moyeu 10, des deux parties 38A, 38B constitutives du palier 37, suivant des directions radialement opposées l'une par rapport à l'autre schématisées par les flèches FA et FB sur ces figures 7, 8, le palier 37 assure par lui-même le maintien axial du voile de moyeu 12 et des flasques 30, 30' par rapport audit moyeu 10, du fait de son engagement dans une saignée transversale 41 de celui-ci et de la présence d'une collerette 42A, 42B sur lesdites parties 38A, 38B qui le constituent.

L'assemblage du dispositif amortisseur de torsion suivant l'invention s'en trouve avantageusement facilité.

Bien entendu, la présente invention ne se limite pas à la forme de réalisation décrite et représentée, mais englobe toute variante d'exécution.

En particulier, au lieu d'être tous identiques et donc de présenter tous une même raideur, les organes élastiques qui interviennent circonférentiellement entre les deuxième et troisième parties constitutives du dispositif amortisseur de torsion suivant l'invention peuvent présenter, isolément ou par groupes, des raideurs différentes.

De même, au lieu d'avoir un même développement circonférentiel, les gorges des dentures que comportent le voile de moyeu et les voiles auxiliaires constituant suivant l'invention ladite deuxième partie d'un tel dispositif amortisseur de torsion peuvent avoir des développements circonférentiels différents.

En outre, le domaine d'application de l'invention n'est pas limité à celui du dispositif amortisseur de torsion plus particulièrement décrit et représenté, et, a fortiori, à celui d'une friction d'embrayage pour véhicule automobile.

Il s'étend au contraire aussi bien à n'importe quel type de dispositif amortisseur de torsion comportant trois parties rotatives l'une par rapport à l'autre.

**Revendications**

1. Dispositif amortisseur de torsion, notamment pour véhicule automobile, du genre comportant au moins trois parties coaxiales, deux à deux montées rotatives l'une par rapport à l'autre dans les limites d'un débattement angulaire déterminé et à l'encontre de moyens élastiques, dits moyens élastiques à action circonférentielle, aptes à agir circonférentiellement entre elles pour une plage au moins d'un tel débattement angulaire, à savoir une première partie·(A) comportant un moyeu (10), une deuxième partie (B) comportant au moins un flasque (12), communément dit voile de moyeu, qui forme transversalement une pièce annulaire autour dudit moyeu (10), avec, entre lui et celui-ci, des moyens d'engrènement à jeu (13), et une troisième partie (C) comportant elle aussi au moins un flasque (30), qui, comme le voile de moyeu (12), et parallèlement à celui-ci, forme transversalement une pièce annulaire autour du moyeu (10), mais sans relation avec celui-ci, caractérisé en ce que, ladite deuxième partie (B) comporte au moins un autre flasque (20), dit ci-après par simple commodité voile auxiliaire, qui, comme le voile de moyeu (12), auquel il est associé, et parallèlement à celui-ci, forme transversalement une pièce annulaire autour du moyeu (10), avec, entre lui et celui-ci, des moyens d'engrènement à jeu (22), en combinaison avec une disposition alternée desdits moyens d'engrènement (22) à jeu par rapport à ceux (13) prévus entre le moyeu (10) et le voile de moyeu (12), dont il résulte que, pour un premier sens circonférentiel du débattement angulaire relatif entre lesdites première et deuxième parties (A, B), c'est le voile du moyeu (12) qui est le premier à intervenir, tandis que, pour le sens circonférentiel opposé dudit débattement angulaire, c'est au contraire le voile auxiliaire (20) qui est le premier à intervenir.

2. Dispositif amortisseur de torsion suivant la revendication 1, caractérisé en ce que, les moyens d'engrènement à jeu (13) entre le moyeu (10) et le voile de moyeu (12) comportent deux dentures (14, 15), dites ici par simple commodité dentures conjuguées, l'une (14) sur le moyeu (10), l'autre (15) sur le voile de moyeu (12), les moyens d'engrènement à jeu (22) entre le moyeu (10) et le voile auxiliaire (20) comportent, de même, deux dentures conjuguées (14, 26), l'une (14) sur le moyeu (10), l'autre (26) sur le voile auxiliaire (20), l'une au moins des dentures de telles dentures conjuguées (14, 15-14, 26) présentant, parallèlement à l'axe de l'ensemble, au moins une dent (16), tandis que l'autre présente, pour coopération avec cette cent, une gorge (19-27), par laquelle elle est engagée sur ladite dent (16), et dont le développement circonférentiel (C1) est supérieur à celui (C2) de celle-ci, et, pour la configuration de repos de l'ensemble, telle que définie par les moyens élastiques à action circonférentielle interposés entre les deux parties (A, B) concernées, il y a, pour un premier sens circonférentiel, un jeu circonférentiel (JT) entre les dentures conjuguées (14, 15) du moyeu (10) et le voile de moyeu (12) supérieur à celui (J'T) existant, pour ce même sens circonférentiel, entre les dentures conjuguées (14, 26) du moyeu (10) et du voile auxiliaire (20), tandis que, pour le sens circonférentiel opposé au précédent, il y a un jeu circonférentiel (JR) entre les dentures conjuguées (14, 26) du moyeu (10) et du voile de moyeu (12) inférieur à celui (J'R) existant, pour le même sens circonférentiel, entre les dentures conjuguées (14, 26) du moyeu (10) et du voile auxiliaire (20).

3. Dispositif amortisseur de torsion suivant la revendication 2, caractérisé en ce que les dentures (15 et 26) du voile de moyeu (12) et du voile auxiliaire (20) sont superposables l'une à l'autre.

4. Dispositif amortisseur de torsion suivant l'une quelconque des revendications 2, 3, caractérisé en ce que le moyeu (10) comporte une même denture (14) pour le voile de moyeu (12) et pour le voile auxiliaire (20).

5. Dispositif amortisseur de torsion suivant l'une quelconque des revendications 1 à 4, caractérisé en ce que, entre les moyens élastiques à actions circonférentielle (46) interposés entre les deux parties (A, B) concernées, d'une part, et le moyeu (10), le voile de moyeu (12) et le voile auxiliaire (20), d'autre part, est circonférentiellement interposée, pour chaque sens circonférentiel, une barrette (50T, 50R), qui s'étend axialement sur une distance au moins égale à celle séparant le voile auxiliaire (20) du voile de moyeu (12), et qui, en appui en permanence contre un épaulement (51T, 51R) du moyeu (10), est adaptée à porter tantôt sur un épaulement (52T, 52R) du voile de moyeu (12), tantôt sur un épaulement (53T, 53R) du voile auxiliaire (20).

6. Dispositif amortisseur de torsion suivant la revendication 5, caractérisé en ce què, pour la configuration de repos de l'ensemble, la barrette (50T) est en appui, d'une part, sur l'épaulement (51T) du moyeu (10), et, d'autre part, sur l'épaulement (53T) du voile auxiliaire (20), et, corollairement la barrette (50R) est en appui, d'une part, sur l'épaulement (51R) du moyeu (10), et, d'autre part, sur l'épaulement (52R) du voile de moyeu (12).

7. Dispositif amortisseur de torsion suivant l'une quelconque des revendications 1 à 6, caractérisé en ce qu'il y a deux voiles auxiliaires (20), qui, établis axialement à distance l'un de l'autre, parallèlement l'un à l'autre, chacun respectivement de part et d'autre du voile de moyeu (12), sont reliés l'un à l'autre par des entretoises axiales (23) traversant ledit voile de moyeu (12) à la faveur d'évidements (24) ménagés à cet effet dans celui-ci.

8. Dispositif amortisseur de torsion suivant la revendication 7, caractérisé en ce que les voiles auxiliaires (20) forment chacun respectivement les flasques axialement les plus extérieurs, et, les moyens élastiques à action circonférentielle interposés entre la deuxième (B) et la troisième (C) parties comportant des organes élastiques (56A, 56B) répartis circulairement, ils constituent des rondelles de guidage pour ces organes élastiques (56A, 56B), en présentant des évidements (58A, 58B) dans lesquels ces derniers sont chacun individuellement au moins logés pour partie.

9. Dispositif amortisseur de torsion suivant les revendications 7, 8, prises conjointement, caractérisé en ce que, lesdits organes élastiques (56A, 56B) étant également logés pour partie dans les évidements (57A, 57B) du voile de moyeu (12), les évidements (24) dudit voile de moyeu (12) à la faveur desquels s'étendent les entretoises (23) reliant l'un à l'autre les deux voiles auxiliaires (20) formant des prolongements circonférentiels, tous dans le même sens, des évidements (57A, 57B) précédents.

10. Dispositif amortisseur de torsion suivant la revendication 9, caractérisé en ce que le bord radial le plus interne de l'un au moins des évidements (57A) du voile de moyeu (12) est formé successivement d'un tronçon de contour circulaire (81'A), qui est centré sur l'axe de l'ensemble, et d'un tronçon rectiligne (81"A), qui s'étend suivant la tangente à son point de raccordement avec le tronçon de contour circulaire (81'A).

11. Dispositif amortisseur de torsion suivant l'une quelconque des revendications 9, 10, caractérisé en ce que le bord radial le plus interne de l'un au moins des évidements (57B) du voile de moyeu (12) est formé successivement d'un tronçon de contour circulaire (81'B), qui est centré sur l'axe de l'ensemble, et d'un tronçon rectiligne (81"B), qui fait un angle (i) avec la tangente à son point de raccordement avec le tronçon de contour circulaire (81'B) en s'étendant radialement entre celle-ci et l'axe de l'ensemble.

12. Dispositif amortisseur de torsion suivant l'une quelconque des revendications 9 à 11, caractérisé en ce que, la troisième partie (C) comportant deux flasques (30, 30'), qui, établis axialement à distance l'un de l'autre, parallèlement l'un à l'autre, chacun respectivement de part et d'autre du voile de moyeu (12), sont reliés l'un à l'autre par des entretoises axiales (31) traversant ledit voile de moyeu (12) à la faveur d'évidements (32) ménagés à cet effet dans celui-ci, lesdits évidements (32) constituant des prolongements circonférentiels, tous dans le même sens, des évidements (57A, 57B) dudit voile de moyeu (12) dans lesquels sont logés pour partie les organes élastiques (56A, 56B) appartenant aux moyens élastiques à action circonférentielle interposés entre la deuxième (B) et la troisième (C) parties.

13. Dispositif amortisseur de torsion suivant la revendication 12, caractérisé en ce que les prolongements circonférentiels des évidements (57A, 57B) du voile de moyeu (12) s'étendent tous circonférentiellement dans le même sens.

14. Dispositif amortisseur de torsion suivant l'une quelconque des revendications 12, 13, caractérisé en ce que les organes élastiques (56A, 56B) étant également logés pour partie dans des évidements (59A, 59B) des flasques (30, 30'), le bord radial le plus interne de l'un au moins desdits évidements (59A, 59B) est formé successivement d'un tronçon de contour circulaire (83'A, 83'B), qui est centré sur l'axe de l'ensemble, et d'un tronçon rectiligne (83"A, 83"B) qui fait un angle (ī) avec la tangente à son point de raccordement avec le tronçon de contour circulaire (83'A, 83'B) en s'étendant radialement au-delà de ladite tangente par rapport à l'axe de l'ensemble.

## Claims

1. A torsion damping device, especially for automotive vehicles, of the kind comprising at least three coaxial parts mounted two by two and rotatable with respect to each other within the limits of a predetermined angular displacement and against the biasing action of resilient means, said resilient means acting circumferentially and being adapted to act circumferentially between themselves over a range of at least one such angular displacement, the said coaxial parts being a first part (A) in the form of a hub (10), a second part (B) in the form of at least one rotatable element (12), commonly called a main damper plate, which constitutes transversely an annular member surrounding the said hub (10), with, between itself and the latter, relative rotational displacement means (13), and a third part (C) which also comprises at least one rotatable element (30) which, like the main damper plate (12) to which it is parallel, constitutes transversely an annular member surrounding the hub (10) but without being coupled therewith, characterised in that the said second part (B) comprises at least one further rotatable element (20), hereinafter for simple convenience being called an auxiliary damper plate, which, like the main damper plate with which it is associated and to which it is parallel, constitutes transversely an annular member surrounding the hub (10), with, between itself and the latter, relative rotational displacement means (22), the said relative rotational displacement means (22) being disposed alternately with those (13) provided between the hub (10) and the main damper plate (12), whereby, for a first circumferential direction of relative angular displacement between the said first and second parts (A, B), it is the main damper plate that is the first to operate, while for the opposite circumferential direction of the said angular displacement, it is by contrast the auxiliary damper plate that is the first to operate.

2. A torsion damping device according to Claim 1, characterised in that the relative rotational displacement means (13) between the hub (10) and the main damper plate (12) comprises two sets of teeth (14, 15), here referred to for simple convenience as conjugate tooth sets, one of which (14) is on the hub (10) and the other of which (15) is on the main damper plate, the relative rotational displacement means (22) between the hub (10) and the auxiliary damper plate (20) similarly comprising two conjugate tooth sets (14, 26), one of which (14) is on the hub and the other of which (26) is on the auxiliary damper plate (20), at least one of the sets of teeth of such conjugate sets (14, 15-14, 26) comprising at least one tooth (16) parallel to the axis of the assembly, while the other set comprises a recess (19-27) for co-operation with this tooth and by which it is engaged with the said tooth (16), the circumferential length (C1) of the groove being greater than that (C2) of the tooth, and, in the configuration of the assembly when at rest as defined by the circumferentially acting resilient means interposed between the two parts concerned (A, B), there is in a first circumferential direction a circumferential clearance (JT), between the conjugate tooth sets (14, 15) of the hub (10) and main damper plate (12), which is greater than that (J'T) existing in the said circumferential direction between the conjugate tooth sets (14, 26) of the hub (10) and auxiliary damper plate (20), while in the opposite circumferential direction there is a circumferential clearance (JR) between the conjugate tooth sets (14, 26) of the hub (10) and main damper plate (12) which is smaller than that (J'R) existing in the said opposite circumferential direction between the conjugate tooth sets (14, 26) of the hub (10) and auxiliary damper plate (20).

3. A torsion damping device according to Claim 2, characterised in that the tooth sets (15 and 26) of the main damper plate and auxiliary damper plate are superimposable on each other.

4. A torsion damping device according to either one of Claims 2 and 3, characterised in that the hub (10) has a single set of teeth (14) for engagement with both the main damper plate (12) and the auxiliary damper plate (20).

5. A torsion damping device according to any one of Claims 1 to 4, characterised in that, between the circumferentially acting resilient means (46) interposed between the two parts concerned (A, B) on the one hand, and on the other hand the main damper plate (12) and the auxiliary damper plate (20), there is interposed for each circumferential direction a guide pin (50T, 50R) which extends axially over a distance at least equal to that separating the auxiliary damper plate (20) from the main damper plate (12), and which, being in permanent engagement against a shoulder (51T, 51R) of the hub (10), is adapted to bear selectively on a shoulder (52T, 52R) of the main damper plate (12), and on a shoulder (53T, 53R) of the auxiliary damper plate (20).

6. A torsion damping device according to Claim 5, characterised in that, in the configuration of the assembly at rest, the guide pin (50T) bears on the shoulder (51T) of the hub (10) on the one hand, and on the other hand on the shoulder (53T) of the auxiliary damper plate (20), and consequently the guide pin (50R) bears on the shoulder (51R) of the hub (10) on the one hand, and on the other hand on the shoulder (52R) of the main damper plate (12).

7. A torsion damping device according to any one of Claims 1 to 6, characterised in that there are two auxiliary damper plates (20) which, being arranged axially spaced apart from each other, parallel one to the other, and respectively on either side of the main damper plate (12), are connected to each other through axial spacers (23) extending across the said main damper plate (12) through holes (24) provided in the latter for the purpose.

8. A torsion damping device according to Claim 7, characterised in that the auxiliary damping plates (20) constitute respectively the outermost rotating elements, the circumferentially acting resilient means interposed between the second part (B) and the third part (C) comprising resilient members (56A, 56B) disposed in a circle, the auxiliary damping plates having apertures (58A, 58B) in which each of these resilient members (56A, 56B) is individually at least partly housed, whereby to constitute guide rings for the said resilient members.

9. A torsion damping device according to Claims 7 and 8 in combination, characterised in that, the said resilient members (56A, 56B) being also partly housed in apertures (57A, 57B) of the main damper plate (12), the holes (24) of the said main damper plate (12), through which the spacers (23) extend, connect to each other the two auxiliary damper plates forming circumferential extensions, all in the same direction, of the said apertures (57A, 57B).

10. A torsion damping device according to Claim 9, characterised in that the radially innermost edge of at least one of the apertures (57A) in the main damper plate (12) is formed in succession with an arcuate portion (81'A) which is coaxial with the assembly, and with a rectilinear portion (81"A) which is tangential to the point at which it joins the arcuate portion (81'A).

11. A torsion damping device according to either one of Claims 9 and 10, characterised in that the radially innermost edge of at least one of the apertures (57B) in the main damper plate (12) is formed in succession with an arcuate portion (81'B) which is coaxial with the assembly, and with a rectilinear portion (81"B) which makes an angle (i) with the tangent at the point at which it joins the arcuate portion (81'B) and extends radially between the latter and the axis of the assembly.

12. A torsion damping device according to any one of Claims 9 to 11, characterised in that the third part (C) comprises two rotary members (30, 30') which are spaced apart from each other and parallel one to the other, being respectively on either side of the main damper plate (12) and connected to each other through axial spacers (31) extending across the said main damper plate (12) through openings (32) provided in the latter for this purpose, the said openings (32) constituting circumferential extensions, all in the same direction, of the apertures (57A, 57B) of the said main damper plate (12) in which the resilient members (56A, 56B) of the circumferentially acting resilient means, interposed between the second part (B) and the third part (C), are partly housed.

13. A torsion damping device according to Claim 12, characterised in that all of the circumferential extensions of the apertures (57A, 57B) in the main damper plate (12) extend circumferentially in the same direction.

14. A torsion damping device according to either one of Claims 12 and 13, characterised in that, the resilient members (56A, 56B) being also housed partly in apertures (59A, 59B) of the rotary members (30, 30'), the innermost radial edge of at least one of the said apertures (59A, 59B) is formed in succession with an arcuate portion (83'A, 83'B) which is coaxial with the assembly, and with a rectilinear portion (83"A, 83"B) which makes an angle (i) with the tangent at the point at which it joins the arcuate portion (83'A, 83'B), extending radially away from the said tangent with respect to the axis of the assembly.

## Patentansprüche

1. Torsionsschwingungsdämpfer, insbesondere für Kraftfahrzeuge, von der Bauart, bei der zumindest drei koaxiale, paarweise gegeneinander in den Grenzen eines vorbestimmten Winkel-Federwegs gegen elastische Mittel, als in Umfangsrichtung wirkende Federmittel bezeichnet, verdrehbare Teile vorgesehen sind, welche Federmittel zwischen ihnen zumindest über einen Abschnitt dieses Winkel-Federwegs in Umfangsrichtung wirken, nämlich ein erstes Teil (A), das eine Nabe (10) aufweist, ein zweites Teil (B), das zumindest eine Scheibe (12), als Nabenscheibe bezeichnet, aufweist, die in Querrichtung ein ringförmiges Teil um die Nabe (10) bildet, mit zwischen diesem und der Nabe vorgesehenen spielbehafteten Verzahnungsmitteln (13), und ein drittes Teil (C), das ebenfalls mindestens eine Scheibe (30) aufweist, die, wie die Nabenscheibe (12) und parallel zu dieser, jedoch ohne Verbindung mit dieser, in Querrichtung ein um die Nabe (10) ringförmiges Teil bildet, dadurch gekennzeichnet, daß das zweite Teil (B) zumindest eine weitere Scheibe (20), der Einfachheit halber als Hilfsscheibe bezeichnet aufweist, die, ebenso wie die Nabenscheibe (12), der sie zugeordnet ist, und parallel zu dieser, in Querrichtung ein ringförmiges Teil um die Nabe (10) bildet, mit spielbehafteten Verzahnungsmitteln (22) zwischen ihr und dieser, kombiniert mit einer wechselweisen Anordnung der spielbehafteten Verzahnungsmittel (22) im Verhältnis zu denjenigen Verzahnungsmitteln (13), die zwischen der Nabe (10) und der Nabenscheibe (12) angeordnet sind, woraus für eine erste Umfangsrichtung des relativen Winkelfederwegs zwischen den genannten ersten und den zweiten Teilen (A, B) resultiert, daß die Nabenscheibe (12) als erste eingreift, während für die entgegengesetzte Umfangsrichtung des genannten Winkelfederwegs demgegenüber die Hilfsscheibe (22) als erste eingreift.

2. Torsionsschwingungsdämpfer nach Anspruch 1, dadurch gekennzeichnet, daß die spielbehafteten Verzahnungsmittel (13) zwischen der Nabe (10) und der Nabenscheibe (12) zwei Zahnungen (14, 15) aufweisen, hier der Einfachheit halber als zugeordnete Zahnungen bezeichnet, deren eine (14) auf der Nabe (10) und deren andere (15) auf der Nabenscheibe (12) angeordnet ist, daß die spielbehafteten Verzahnungsmittel (22) zwischen der Nabe (10) und der Hilfsscheibe (20) ebenfalls zwei einander zugeordnete Zahnungen (14, 26) aufweisen, von denen die eine (14) auf der Nabe (10) und die andere (26) auf der Hilfsscheibe (20) angeordnet ist, wobei zumindest eine der Zahnungen solcher zugeordneter Zahnuangen (14, 15-14, 26) parallel zur Achse der Anordnung, zumindest einen Zahn (16) aufweist, während die andere zum Zusammenwirken mit diesem Zahn eine Kehle (19-27) aufweist, mittels welcher sie den genannten Zahn (16) aufgesetzt ist und deren Umfangserstreckung (C1) größer ist als diejenige (C2) des Zahns, und wobei für die Ruhestellung der Anordnung, wie sie durch die zwischen den beiden betreffenden Teilen (A, B) eingesetzten, in Umfangsrichtung wirkenden Federmitteln bestimmt ist, für eine erste Umfangsrichtung ein Spiel (JT) in Umfangsrichtung zwischen den zugeordneten Zähnen (14, 15) der Nabe (10) und der Nabenscheibe (12) vorhanden ist, das größer ist als das Spiel (J'T), das für die gleiche Umfangsrichtung zwischen den zugeordneten Zahnungen (14, 26) der Nabe (10) und der Hilfsscheibe (20) existiert, während in der zur vorhergehenden entgegengesetzten Umfangsrichtung ein Spiel (JR) in Umfangsrichtung zwischen den zugeordneten Zahnungen (14, 26) der Nabe (10) und der Nabenscheibe (12) vorhanden ist, das kleiner ist als das Spiel (J'R), das in der gleichen Richtung zwischen den zugeordneten Zahnungen (14, 26) der Nabe (10) und der Hilfsscheibe (20) existiert.

3. Torsionsschwingungsdämpfer nach Anspruch 2, dadurch gekennzeichnet, daß die Zahnungen (15, 26) der Nabenscheibe (12) und der Hilfsscheibe (20) gegenseitig überdeckbar sind.

4. Torsionsschwingungsdämpfer nach einem der Ansprüche 2 oder 3, dadurch gekennzeichnet, daß die Nabe (10) dieselbe Zahnung (14) für die Nabenscheibe (12) und für die Hilfsscheibe (20) aufweist.

5. Torsionsschwingungsdämpfer nach mindestens einem der Ansprüche 1 bis 4, dadurch gekennzeichnet, daß zwischen den in Umfangsrichtung wirkenden elastischen Mitteln (46), die zwischen den betreffenden beiden Teilen (A, B) eingesetzt sind, zum einen und der Nabe (10), der Nabenscheibe (12) und der Hilfsscheibe (20) zum anderen in Umfangsrichtung für jeden Richtungssinn eine Stegbrücke (50T, 50R) eingesetzt ist, die sich axial über eine Distanz erstreckt, die zumindest gleich ist derjenigen, die die Hilfsscheibe (20) von der Nabenscheibe (12) trennt und die ständig gegen eine Schulter (51T, 51R) der Nabe (10) anliegt und dazu ausgebildet ist, mal gegen eine Schulter (52T, 52R) der Nabenscheibe (12) und mal gegen eine Schulter (53T, 53R) der Hilfsscheibe (20) anzuliegen.

6. Torsionsschwingungsdämpfer nach Anspruch 5, dadurch gekennzeichnet, daß in der Ruhestellung der Anordnung die Brücke (50T) sich in Anlage zum einen an der Schulter (51T) der Nabe (10), und zum anderen an der Schulter (53T) der Hilfsscheibe (20) befindet und demzufolge die Brücke (50R) in Anlage zum einen an der Schulter (51R) der Nabe (10) und zum anderen der Schulter (52R) der Nabenscheibe (12).

7. Torsionsschwingungsdämpfer nach mindestens einem der Ansprüche 1 bis 6, dadurch gekennzeichnet, daß zwei Hilfsscheiben (20) vorgesehen sind, die in einem axialen Abstand parallel jeweils zu beiden Seiten der Nabenscheibe (12) angeordnet und miteinander durch axiale Abstandselemente (23) verbunden sind, welche die Nabenscheibe (12) durch zu diesem Zweck in ihr ausgebildete Ausnehmungen (24) durchqueren.

8. Torsionsschwingungsdämpfer nach Anspruch 7, dadurch gekennzeichnet, daß die Hilfsscheiben (20) jeweils die axial äußersten Scheiben bilden und daß die in Umfangsrichtung wirkenden, zwischen dem zweiten (B) und dem dritten Teil (C) eingesetzten elastischen Mittel, die im Kreis verteilte elastische Organe (56A, 56B) aufweisen, wobei die Hilfsscheiben für diese elastischen Organe (56A, 56B) Führungsringe bilden und Ausnehmungen (58A, 58B) aufweisen, in welchen letztere jeweils zumindest zum Teil aufgenommen sind.

9. Torsionsschwingungsdämpfer nach Anspruch 7, 8 gemeinsam, dadurch gekennzeichnet, daß die genannten elastischen Organe (56A, 56B) ebenfalls zum Teil in Ausnehmungen (57A, 57B) der Nabenscheibe (12) aufgenommen sind, wobei die Ausnehmungen (24) der Nabenscheibe (12), durch die hindurch sich die Abstandsorgane (23), welche die beiden Hilfsscheiben (20) miteinander verbinden, sich in Umfangsrichtung erstreckende Verlängerungen, alle im gleichen Richtungssinn, die vorgenannten Ausnehmungen (57A, 57B) ausbilden.

10. Torsionsschwingungsdämpfer nach Anspruch 9, dadurch gekennzeichnet, daß der radial innerste Rand zumindest einer der Ausnehmungen (57A) der Nabenscheibe (12) sukzessive aus einem Abschnitt kreisförmiger Kontur (81'A), dessen Mittelpunkt auf der Achse der Anordnung liegt und einem geradlinigen Abschnitt (81"A) geformt ist, der sich entlang der Tangente in seinem Verbindungspunkt mit dem Abschnitt kreisförmiger Kontur (81'A) erstreckt.

11. Torsionsschwingungsdämpfer nach einem der Ansprüche 9 oder 10, dadurch gekennzeichnet, daß der radial innerste Rand zumindest einer der Ausnehmungen (57B) der Nabenscheibe (12) sukzessive von einem Abschnitt kreisförmiger Kontur (81'B), dessen Mittelpunkt auf der Achse der Anordnung liegt und einem geradlinigen Abschnitt (81"B) gebildet ist, der einen Winkel (i) mit der Tangente in seinem Verbindungspunkt mit dem Abschnitt kreisförmiger Kontur (81'B) bildet und sich dabei radial zwischen dieser und der Achse der Anordnung erstreckt.

12. Torsionsschwingungsdämpfer nach mindestens einem der Ansprüche 9 bis 11, dadurch gekennzeichnet, daß das dritte Teil (C) zwei Flansche (30, 30') aufweist, die axial in einem Abstand und parallel zueinander jeweils zu beiden Seiten der Nabenscheibe (12) angeordnet und miteinander durch sich axial erstreckende Abstandsorgane (31) verbunden sind, die die Nabenscheibe (12) durch zu diesem Zweck in dieser ausgebildete Ausnehmungen (32) durchqueren, wobei die Ausnehmungen (32) Verlängerungen der Ausnehmungen (57A, 57B) in Umfangsrichtung, alle in gleichem Richtungssinn, der Nabenscheibe (12) bilden, in welcher teilweise die elastischen Organe (56A, 56B) eingesetzt sind, die den in Umfangsrichtung wirkenden, zwischen dem zweiten (B) und dem dritten (C) Teil eingesetzten elastischen Mitteln zugeordnet sind.

13. Torsionsschwingungsdämpfer nach Anspruch 12, dadurch gekennzeichnet, daß die sich in Umfangsrichtung erstreckenden Verlängerungen der Ausnehmungen (57A, 57B) der Nabenscheibe (12) sich alle in Umfangsrichtung in die gleiche Richtung erstrecken.

14. Torsionsschwingungsdämpfer nach einem der Ansprüche 12, 13, dadurch gekennzeichnet, daß die elastischen Organe (56A, 56B) ebenfalls zum Teil in Ausnehmungen (59A, 59B) der Flansche (30, 30') aufgenommen sind, wobei der radial innerste Rand zumindest einer der Ausnehmungen (59A, 59B) sukzessive von einem Abschnitt kreisförmiger Kontur (83'A, 83'B), dessen Zentrum auf der Achse der Anordnung liegt und einem geradlinigen Abschnitt (83"A, 83"B) geformt wird, der einen Winkel (i) mit der Tangente an seinem Verbindungspunkt mit dem Abschnitt mit kreisförmiger Kontur (83'A, 83'B) bildet und sich dabei bezüglich der Achse der Anordnung radial jenseits der Tangente erstreckt.

FIG.1

FIG. 2

FIG.3

FIG.4

0 174 233

FIG.5

FIG.6

FIG.7

FIG.9

FIG.8

FIG.10

## FIG.11

## FIG.13

## FIG.14

## FIG.12

FIG.15A

FIG.15B

FIG.15C

FIG.15D